Europäisches Patentamt

**European Patent Office**

**Office européen des brevets**

(11) Veröffentlichungsnummer: **0 090 795**
**A1**

## (12) EUROPÄISCHE PATENTANMELDUNG

(21) Anmeldenummer: 83890046.2

(22) Anmeldetag: 25.03.83

(51) Int. Cl.³: **A 61 C 13/26**

(30) Priorität: 30.03.82 AT 1241/82

(43) Veröffentlichungstag der Anmeldung: 05.10.83
**Patentblatt 83/40**

(84) Benannte Vertragsstaaten: **BE CH DE FR GB IT LI LU NL SE**

(71) Anmelder: **Wajboda, Adolf, Sterneckstrasse 10, A-9020 Klagenfurt (AT)**

(72) Erfinder: **Wajboda, Adolf, Sterneckstrasse 10, A-9020 Klagenfurt (AT)**

(74) Vertreter: **Gibler, Ferdinand, Dipl.Ing.Dr.tech., Singerstrasse 8, A-1010 Wien (AT)**

(54) **Vorrichtung für die Zahnprothetik.**

(57) Vorrichtung zur Befestigung eines abnehmbaren Prothesenteils an einem feststehenden Teil, wie z.B. einer Krone, Brücke oder einem Zahn bei der an einem Teil eine Patrize und an dem anderen eine Matrize befestigt sind, wobei an dem feststehenden Teil (1) die als Stift (3) ausgebildete Patrize (2) befestigt ist, die an ihrem freien Ende mit einem Ringwulst (4) versehen ist und an dem abnehmbaren Prothesenteil (5) eine Matrize (6) befestigt ist, die im Bereich ihres freien Endes U-förmig gebogen ist, wobei die beiden Schenkel (7, 8) im wesentlichen rechtwinkelig zur übrigen Matrize abstehen und der das freie Ende auf weisende Schenkel (8) einen der Querschnittsabmessung des Stiftes (3) der Patrize (2) entsprechenden Schlitz (10) aufweist, um auf die Patrize (2) aufgeschoben werden zu können.

- 1 -

## Vorrichtung für die Zahnprothetik

Die Erfindung bezieht sich auf eine Vorrichtung für die Zahnprothetik zur Befestigung eines abnehmbaren Prothesenteils an einem feststehenden Teil, wie z.B. einer Krone, Brücke oder einem Zahn bei der an einem Teil eine Patrize und an dem anderen eine Matrize befestigt sind.

Derartige Vorrichtungen sind z.B. durch die DE-OS 2 230 467 bekannt geworden. Bei dieser bekannten Lösung ist eine Patrize mit einer in Längsrichtung der Zähne verlaufenden, im wesentlichen zylindrischen Verdickung, die über einen Steg mit einer Verankerungsplatte verbunden ist vorhanden. Die Matrize weist einen Schlitz auf, der in einer zylindrischen Bohrung endet, die zur Aufnahme der Verdickung der Patrize dient.

Der Nachteil dieser Lösung besteht in der komplizierten Form der Patrize und der Matrize. Außerdem weisen die Matrize und die Patrize eine erhebliche Breite auf.

- 2 -

Weiters wurde durch die DE-OS 24 43 584 eine Lösung bekannt, bei der die Patrize durch eine Platte mit einer im Querschnitt trapezförmigen Erhebung gebildet ist, die in eine gegengleich geformte Matrize einschiebbar ist. In diesem Fall ergibt sich zwar eine geringere Breite, doch sind die Teile relativ schwierig herstellbar und erfordern eine hohe Genauigkeit.

Ziel der Erfindung ist es eine Vorrichtung der eingangs erwähnten Art vorzuschlagen, die sich durch eine geringe Breite auszeichnet und deren Teile einfach herstellbar sind und bei denen größere Toleranzen zugelassen werden können, ohne daß deshalb der sichere und feste Halt des Zahnersatzes leidet.

Erfindungsgemäß wird dies dadurch erreicht, daß an dem feststehenden Teil die als Stift ausgebildete Patrize befestigt ist, die an ihrem freien Ende mit einem Ringwulst versehen ist und an dem abnehmbaren Prothesenteil eine Matrize befestigt ist, die im Bereich ihres freien Endes U-förmig gebogen ist, wobei die beiden Schenkel im wesentlichen rechtwinkelig zur übrigen Matrize abstehen und der das freie Ende aufweisende Schenkel einen der Querschnittsabmessung des Stiftes des Patrize entsprechenden Schlitz aufweist, um auf die Patrize aufgeschoben werden zu können. Dadurch erfolgt die Verbindung über einfach geformte Teile, die einfach herstellbar sind, bei denen praktisch keine durch eine allfällige gegenseitige Bewegung der Teile der Vorrichtung bedingte Abnutzung an dem abnehmbaren Pro-

- 3 -

thesenteil oder dem feststehenden Teil auftreten können.
Zu Abnutzungserscheinungen kann es nur an der Matrize
und der Patrize kommen, wobei insbesondere die Matrize
im Bedarfsfalle leicht nachgearbeitet werden kann.
Außerdem kann die Matrize federnd ausgebildet werden,
wodurch es möglich wird relativ große Toleranzen zuzulassen,
ohne daß dies negative Auswirkungen auf den Sitz des Zahnersatzes hätte.

Besonders vorteilhaft ist es, wenn die Patrize an dem
feststehenden Teil mit einem Bund anliegt, wobei der
lichte Abstand zwischen dem Bund und dem Ringwulst die
Materialstärke des freien Schenkels der Matrize übersteigt. Auf diese Weise wird ein Anliegen der Matrize
an dem feststehenden Teil vermieden, wodurch letzterer
besonders geschont wird.

Nach einem weiteren Merkmal der Erfindung ist vorgesehen,
daß der Schlitz der Matrize im wesentlichen lyraförmig
ausgebildet ist, wobei der parallele Begrenzungsflächen
aufweisende Abschnitt eine unter der entsprechenden
Querschnittsabmessung des Stiftes der Patrize liegende
lichte Weite aufweist. Dadurch läßt sich eine besonders
feste und sichere Verbindung erzielen. Zum leichteren
Aufsetzen der Matrize auf die Patrize ist es vorteilhaft, wenn die den Schlitz der Matrize begrenzenden
Kanten mit Fasen versehen sind.

Bei einer bevorzugten Ausführungsform der Erfindung ist
vorgesehen, daß die Matrize mit dem abnehmbaren Prothesenteil unlösbar verbunden oder an diesen angeformt ist.
Desgleichen ist es zweckmäßig, wenn die Patrize mit
dem feststehenden Teil unlösbar verbunden, z.B. ange-

- 4 -

lötet oder an diesen angeformt ist. Auf diese Weise werden Probleme, die sich bei lösbaren Verbindungen aufgrund der unvermeidlichen Spiele ergeben könnten, vermieden.

Insbesondere zur Befestigung der Patrize an einem Zahn oder einer nachträglichen Anbringung einer solchen an einer Krone ist nach einem weiteren Erfindungsmerkmal vorgesehen, daß die Patrize mit einem Gewinde versehen und in dem feststehenden Teil eingeschraubt ist, wobei diese Schraubverbindung gegebenenfalls durch erhärtende Massen gesichert ist.

Die Erfindung wird nun an Hand der Zeichnung näher erläutert. Dabei zeigt Fig. 1 ein Gebißmodel mit einer Patrize versehenen Hülse, Fig. 2 einen mit einer Matrize versehenen abnehmbaren Prothesenteil zur Aufnahme künstlicher Zähne, Fig. 3 einen an einer mit einer Patrize versehenen Krone eingehakten Prothesenteil zur Aufnahme künstlicher Zähne, Fig. 4 und 5 eine Matrize in Stirn- und Seitenansicht, Fig. 6 und 7 verschiedene Ausführungen von Patrizen gemäß der Erfindung.

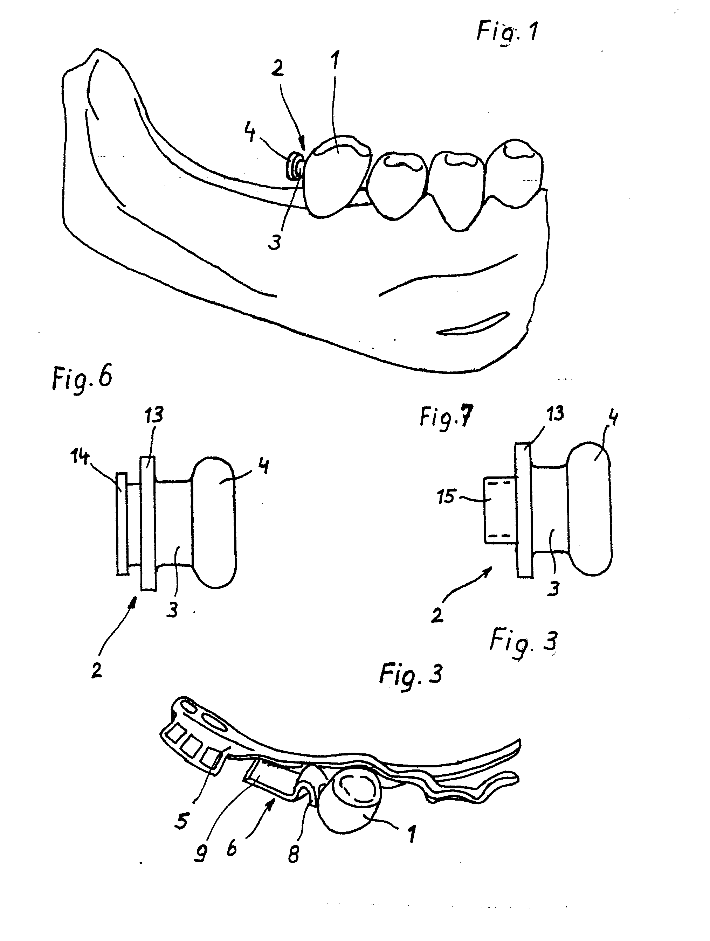

Fig. 1 zeigt ein Gebißmodel, bei dem ein Zahn mit einer Krone 1 z.B. aus Gold versehen ist. An dieser Krone 1 ist eine Patrize 2 befestigt oder einstückig angeformt. Diese Patrize 2 ist im wesentlichen durch einen Stift 3 gebildet, an dessen freiem Ende ein Ringwulst 4 angeformt ist.

An einem abnehmbaren Prothesenteil 5 zur Aufnahme von künstlichen Zähnen ist nach der Erfindung, wie Fig. 2 zeigt, eine Matrize 6 z.B. durch Anlöten befestigt, wobei aber auch eine einstückige Anformung der Matrize 6 möglich ist. Diese Matrize 6 ist an ihrem freien Endbereich U-förmig gebogen, wobei die beiden Schenkel 7,8 von dem mit dem Prothesenteil 5 verlöteten Halteteil 9 der Matrize 6 im wesentlichen rechtwinkelig abstehen.

Der das freie Ende der Matrize 6 aufweisende Schenkel 8 ist, wie aus Fig. 4 ersichtlich, mit einem lyraförmigen Schlitz 10 versehen, dessen parallel verlaufende Wände aufweisender Abschnitt an der Stirnfläche 11 des Schenkels 8 offen ist. Der Radius des sich erweiternden Abschnitts des lyraförmigen Schlitzes 10 ist gleich dem Radius des Stiftes 3 der Patrize 2, wogegen der parallel verlaufende Wände aufweisende Abschnitt des Schlitzes 10 eine lichte Weite aufweist, die geringfügig kleiner als der Durchmesser des Stiftes 3 der Patrize 2 ist. Dadurch wird ein sicherer Halt der Verbindung erreicht, wobei beim Aufschieben der Matrize auf die Patrize die stehen gebliebenen Teile des Schenkels 8 federnd gespreizt werden.

Wie aus Fig. 3 zu entnehmen ist, wird der mit der Matrize 6 verbundene oder mit dieser einstückig geformte Prothesenteil 5 mit einem feststehenden Teil z.B. einer Krone 1 dadurch verbunden, daß die Matrize 6 auf die Patrize 2 aufgeschoben wird. Dabei tritt der Stift 3 der Patrize in den Schlitz 10 des Schenkels 8 der Matrize 6 ein, wobei es zu einem federnden Spreizen der bei den zinkenartigen Abschnitten des Schenkels 8 kommt, und rastet letztlich

- 6 -

in den sich erweiternden bzw. gerundeten Abschnitt des lyraförmigen Schlitzes 10 ein. Die Wände dieses Schlitzes sind an ihren Rändern mit Fasen 12 versehen.

Die Patrize 2 weist zweckmäßigerweise außer dem Ringwulst 4 noch einen Bund 13 auf, wodurch ein direktes Anliegen der Matrize 6 an dem feststehenden Teil vermieden wird. Der lichte Abstand zwischen dem Bund 13 und dem Ringwulst 4 ist vorteilhafterweise geringfügig größer als die Materialstärke des Schenkels 8 der Matrize. Der lichte Abstand der beiden Schenkel 7,8 der Matrize 6 wird dagegen zweckmäßigerweise gleich der axialen Erstreckung des Ringwulstes 4 der Patrize 2 gewählt.

Die in Fig. 6 dargestellte Patrize 2 ist für das Anlöten z.B. an einer Goldkrone konzipiert und weist einen vom Bund 13 axial beabstandeten weiteren Bund 14 auf. Die zwischen den beiden Bünden 13,14 verbleibende Rille kann daher beim Anlöten vom Lot erfüllt werden, wodurch eine besondere Festigkeit der Lötverbindung erreicht wird.

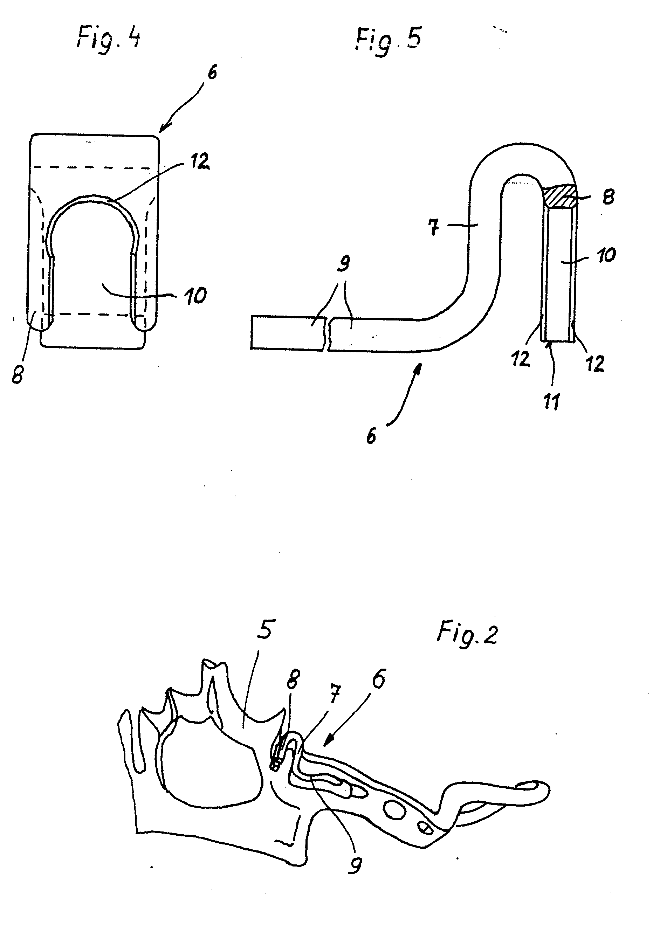

Die in Fig. 7 dargestellte Patrize 2 ist dagegen statt mit einem weiteren Bund 14, mit einem Gewindestift 15 versehen. Dieser ermöglicht es, die Patrize 2 nachträglich an einem feststehenden Teil, z.B. einer Krone oder einem Zahn zu befestigen.

- 1 -

Patentansprüche:

1. Vorrichtung für die Zahnprothetik zur Befestigung
eines abnehmbaren Prothesenteils an einem feststehenden Teil, wie z.B. einer Krone, Brücke oder
einem Zahn bei der an einem Teil eine Patrize und
an dem anderen eine Matrize befestigt sind,
dadurch gekennzeichnet,
daß an dem festehenden Teil (1) die als Stift (3)
ausgebildete Patrize (2) befestigt ist, die an
ihrem freien Ende mit einem Ringwulst (4) versehen
ist und an dem abnehmbaren Prothesenteil (5) eine
Matrize (6) befestigt ist, die im Bereich ihres
freien Endes U-förmig gebogen ist, wobei die beiden
Schenkel (7,8) im wesentlichen rechtwinkelig zur
übrigen Matrize abstehen und der das freie Ende
aufweisende Schenkel (8) einen der Querschnittsabmessung des Stiftes (3) der Patrize (2) entsprechenden Schlitz (10) aufweist, um auf die
Patrize (2) aufgeschoben werden zu können.

2. Vorrichtung nach Anspruch 1,
dadurch gekennzeichnet,
daß der Schlitz (10) der Matrize (6) lyraförmig ausgebildet ist, wobei der parallele Begrenzungsflächen
aufweisende Abschnitt eine unter der entsprechenden
Querschnittsabmessung des Stiftes (3) der Patrize (2) liegende lichte Weite aufweist.

3. Vorrichtung nach Anspruch 1 oder 2,
   dadurch gekennzeichnet,
   daß die den Schlitz (10) der Matrize (6) begrenzenden
   Kanten mit Fasen (12) versehen sind.

4. Vorrichtung nach einem der Ansprüche 1 bis 3,
   dadurch gekennzeichnet,
   daß die Patrize (2)     an dem feststehenden Teil
   (1) mit einem Bund (13) anliegt, wobei der lichte
   Abstand zwischen dem Bund (13) und dem Ringwulst
   (4) die Materialstärke des freien Schenkels (8)
   der Matrize (6) übersteigt.

5. Vorrichtung nach einem der Ansprüche 1 bis 4,
   dadurch gekennzeichnet,
   daß die Matrize (6) mit dem abnehmbaren Prothesenteil (5) unlösbar verbunden oder an diesen angeformt ist.

6. Vorrichtung nach einem der Ansprüche 1 bis 5,
   dadurch gekennzeichnet,
   daß die Patrize (2) mit dem feststehenden Teil (1)
   unlösbar verbunden, z.B. angelötet oder an diesen
   angeformt ist.

7. Vorrichtung nach einem der Ansprüche 1 bis 5.
   dadurch gekennzeichnet,
   daß die Patrize (2) mit einem Gewinde (15) versehen
   und in dem feststehenden Teil (1) eingeschraubt ist,
   wobei diese Schraubverbindung gegebenenfalls durch
   erhärtende Massen gesichert sind.

*Fig. 1*

*Fig. 6*

*Fig. 7*

*Fig. 3*

*Fig. 3*

0090795

Fig. 4

Fig. 5

Fig. 2

0090795

Europäisches Patentamt

## EUROPÄISCHER RECHERCHENBERICHT

Nummer der Anmeldung

EP 83 89 0046

| | EINSCHLÄGIGE DOKUMENTE | | |
|---|---|---|---|
| Kategorie | Kennzeichnung des Dokuments mit Angabe, soweit erforderlich, der maßgeblichen Teile | Betrifft Anspruch | KLASSIFIKATION DER ANMELDUNG (Int. Cl. ³) |
| X | US-A-2 609 605 (DILLON) <br> * Ganzes Dokument * <br><br> --- | 1,4-6 | A 61 C 13/26 |
| A | DE-A-1 766 353 (KOSKA) <br> * Seite 4, Zeilen 4-19 * <br><br> --- | 1 | |
| A | US-A-4 259 073 (EMMONS) <br> * Spalte 4, Zeilen 52-65; Figur 3 * <br><br> --- | 2 | |
| A | US-A-3 656 236 (KURER) <br> * Spalte 2, Zeilen 60-68 * <br><br> --- | 7 | |
| D,A | DE-A-2 230 467 (GOHL) <br><br> --- | | |
| D,A | DE-A-2 443 584 (HAKER) <br><br> ----- | | RECHERCHIERTE SACHGEBIETE (Int. Cl. ³) <br><br> A 61 C 13/00 |

Der vorliegende Recherchenbericht wurde für alle Patentansprüche erstellt.

| Recherchenort | Abschlußdatum der Recherche | Prüfer |
|---|---|---|
| BERLIN | 21-06-1983 | SIMON J J P |